# EUROPEAN PATENT APPLICATION

(11) **EP 3 499 420 A1**
(43) Date of publication of application: **19.06.2019**
(21) Application number: 18212219.2
(22) Date of filing: 13.12.2018
(51) Int. Cl.: G06K 13/14, G06K 17/00, B65D 83/08

(54) **ROTARY-DISK TYPE CARD STORAGE AND RETRIEVAL DEVICE AND CARD STORAGE AND RETRIEVAL APPARATUS**

(30) Priority: 13.12.2017 CN 201711358578; 13.12.2017 CN 201711348002; 13.12.2017 CN 201721736164 U; 13.12.2017 CN 201711346855; 13.12.2017 CN 201711347880; 13.12.2017 CN 201711347554
(71) Applicant: Wang, Kailai, Guangzhou, Guangdong 510650 (CN)
(72) Inventor: WANG, Kailai, Guangzhou, Guangdong 510650 (CN); WU, Weiwen, Guangzhou, 510650 (CN); LI, Nanbiao, Guangzhou, 510650 (CN); XU, Fei, Guangzhou, 510650 (CN); XIE, Chengjian, Guangzhou, 510650 (CN); TAN, Zhiquan, Guangzhou, 510650 (CN)
(74) Representative: Osha Liang

(57) **Abstract**

A rotary-disk type card storage and retrieval device and a card storage and retrieval apparatus are disclosed. The aforementioned device comprises: a support; a rotary disk; a rotary disk driving mechanism; and a card-holding belt, wherein an axis of the rotary disk is horizontally arranged, a plurality of card storage slots are provided on the rotary disk, one end of each of the plurality of card storage slots is an access opening located on an outer cylindrical surface of the rotary disk, the other end of each of the plurality of card storage slots extends into the interior of the rotary disk, the card-holding belt has a card-holding section and rotates synchronously with the rotary disk, the card-holding section has a blocking portion extending to the access openings of the card storage slots, and the cards in the lower portion of the rotary disk are supported by the blocking portion.

## Description

### BACKGROUND

Embodiments disclosed herein relate generally to a smart card apparatus. More specifically, embodiments disclosed herein relate to a rotary-disk type card storage and retrieval device and a card storage and retrieval apparatus.

With the development of society and economy, smart cards have been widely used. Smart cards can be divided into general-purpose cards and exclusive cards. General-purpose cards can be distributed to unspecified users. Such cards are usually produced by card-making entities and then distributed to specific users through purchase, free delivery, etc. Exclusive cards are made for specific users, in which cards personalized information is recorded. After the exclusive cards are produced, they need to be distributed to specific users. Conventionally, the distribution of exclusive cards is usually done by having the users come to a location designated by the card-issuing entity, and the cards are distributed manually. Disadvantages of this are that there must be dedicated staff members to issue the cards, and that the reception of the cards is restricted by the card-issuing location and the working time of the card-issuing entity, which is inefficient and inconvenient. For this reason, in the prior art, card storage and retrieval apparatus that can store, sort, and retrieve cards have been developed, on which a user can autonomously obtain a card by virtue of personal identification information. For example, Chinese invention patent application with the publication number of CN106115088A discloses a "smart card storage and retrieval apparatus".

However, since the axis of the rotary plates of the smart card storage and retrieval apparatus described in the aforementioned reference is vertically arranged, the upper plate and the lower plate being horizontally arranged, although the lower plate can play a role in supporting the cards so that the cards will not drop off, the cards between the upper plate and the lower plate are prone to moving radially outwards under the effect of centrifugal force, which could even dislodge the cards from the card storage portion. In order to prevent the cards from moving radially outwards, a stopper may be provided on the outer side of the upper plate and the lower plate. The stopper has an arc-shaped blocking surface, and the blocking surface is used to limit the radial movement of the cards. But this will bring the following problem: when the cards are rotated along with the upper plate and the lower plate, relative frictional motion can occur between the cards and the stopper. On the one hand, this causes abrasion to the cards and increases resistance to the rotation of the upper plate and the lower plate.

Additionally, the cards in the smart card storage and retrieval apparatus must be stored in the card storage space with their surfaces in the vertical position. But, according to customary operation, a card is in the horizontal position when being stored and retrieved. Therefore, a card turning device needs to be provided in said apparatus to adjust card posture, which not only makes the structure of the smart card storage and retrieval apparatus more complicated and the manufacturing cost higher, but also increases the time for storing cards and affects the speed of card storage and retrieval.

### SUMMARY

One or more embodiments of the present invention provide a rotary-disk type card storage and retrieval device. The cards stored in the rotary-disk type card storage and retrieval device do not easily move due to gravity and centrifugal force during rotation of the rotary disk. Relative frictional sliding which would damage the cards is unlikely to occur, and there is little additional resistance posed on the rotary disk. In addition, the rotary-disk type card storage and retrieval device may also improve card storage efficiency, reduce the equipment cost, and accelerate the storage and retrieval process.

One or more embodiments of the present invention provide a card storage and retrieval apparatus comprising the above-described card storage and retrieval device.

In one or more embodiments of the present disclosure, a rotary-disk type card storage and retrieval device is provided, the device comprising a support; a rotary disk disposed on the support; a rotary disk driving mechanism that drives the rotary disk to rotate; and a card-holding belt that supports the cards, wherein an axis of the rotary disk is horizontally arranged, wherein the rotary disk is provided with a plurality of card storage slots that store cards, the card storage slots being evenly distributed along a circumferential direction of the rotary disk, wherein one end of each of the plurality of card storage slots is an access opening for a card to enter and exit, the access opening being located on an outer cylindrical surface of the rotary disk, wherein the other end of each of the plurality of card storage slots extends into the interior of the rotary disk, wherein the card-holding belt has a card-holding section surrounding a lower portion of the outer cylindrical surface of the rotary disk and the card-holding belt rotates synchronously with the rotary disk, and wherein the card-holding section of the card-holding belt has a blocking portion extending to the access openings of the card storage slots and the cards in the lower portion of the rotary disk are supported by the blocking portion.

Each of the card storage slots extends along a radial plane of the rotary disk. Alternatively, each of the card storage slots extends along a plane that forms an angle with a radial plane of the rotary disk.

The rotary disk comprises two circular plates opposite to each other and a connecting shaft that connects the two circular plates. The opposite surfaces of the two circular plates are both provided with grooves evenly distributed along the circumferential direction that position and guide the cards. The grooves on the two circular plates are disposed opposite and parallel to each other in a one-to-one correspondence. Two opposite grooves and the space between the two grooves combine to form one card storage slot. The radial depth of each of the plurality of card storage slots is equal to or slightly greater than a length of the card in the same direction.

The two ends of the connecting shaft are respectively connected to central portions of the two circular plates, and the connecting shaft is arranged coaxially with the two circular plates.

The rotary disk driving mechanism comprises a motor and a transmission mechanism that transmits the driving power of the motor to the rotary disk to drive the rotary disk to rotate.

The card-holding belt is a synchronous belt, and a plurality of engaging teeth are provided on an outer circumferential surface of one of the circular plates, wherein the positions of the plurality of engaging teeth are in a one-to-one correspondence with the grooves on said circular plate. A plurality of synchronous teeth are provided on an outer surface of the card-holding belt, and the plurality of synchronous teeth on the card-holding section of the card-holding belt engage with the plurality of engaging teeth.

The card-holding belt can be used as a transmission belt for the motor to drive the rotary disk to rotate. Alternatively, the card-holding belt can be used only as a card-holding belt that supports the cards.

A fixed baffle that prevents the cards from being tossed out due to inertia is provided on an outer side of an upper portion of the outer circumferential surface of the rotary disk. The baffle and the card-holding belt combine to form a card-blocking mechanism.

A card storage and retrieval apparatus comprises the above-described card storage and retrieval device; a card issuing device that holds cards to be stored and issues the cards one by one; and a card transport mechanism, wherein a card entrance-exit that allows the cards to enter or leave the card storage slots of the rotary disk is provided on an outer side of the rotary disk of the rotary-disk type card storage and retrieval device, wherein the card transport mechanism is used to transport a card issued by the card issuing device to the card entrance-exit and put the card into a card storage slot of the rotary disk, and to take out a card at the card entrance-exit from a card storage slot of the rotary disk and carry the card to a user retrieval opening.

The card storage and retrieval apparatus further comprises an identification device that identifies characteristic information of cards and a control system, wherein the control system records all the card storage slots in the rotary disk, determines a card storage slot uniquely corresponding to a card according to the characteristic information of the card identified by the identification device when the card is being stored, and causes the rotary disk to rotate by controlling the rotary disk driving mechanism so that the uniquely corresponding card storage slot is turned to the card entrance-exit. Further, the control system determines a corresponding card to be retrieved in the rotary disk according to a card-retrieval instruction from a user and causes the rotary disk to rotate by controlling the rotary disk driving mechanism so that the card storage slot that stores the card to be retrieved is turned to the card entrance-exit.

The card transport mechanism comprises a clamping mechanism that clamps the card and a card transport driving mechanism that moves the clamping mechanism, wherein the clamping mechanism comprises a first clamping block and a second clamping block that can reach into spaces on both sides of a card in a card storage slot of the rotary disk, and a clamping driving mechanism that drives the clamping and releasing of the first clamping block and the second clamping block.

The card transport driving mechanism comprises a longitudinal driving mechanism that drives the clamping mechanism to move in a longitudinal direction and a transverse driving mechanism that drives the clamping mechanism to move in a transverse direction.

The card transport driving mechanism comprises a card delivery cart and a cart driving mechanism that drives the card delivery cart.

Compared with the prior art, one or more embodiments disclosed herein may have the following beneficial effects.

The cards in the card storage slots in the lower portion of the rotary disk in the rotary-disk type card storage and retrieval device according to one or more embodiments disclosed herein will not drop from the card storage slots because the cards are supported by the card-holding belt. And due to the synchronous rotation of the card-holding belt with the rotary disk, there is no relative frictional movement between the cards and the card-holding belt, so that the card will not be damaged, nor will resistance to the rotary disk increase.

The axis of the rotary disk in the card storage and retrieval apparatus according to one or more embodiments disclosed herein is horizontally arranged. The card storage slots in the rotary disk are evenly distributed along the circumferential direction of the rotary disk, and the card entrance-exit for the card storage slots is disposed on the cylindrical surface of the rotary disk. Thus, when a card is being stored or retrieved, the card is in a horizontal state as is customary, and there is no need to provide a turning mechanism to turn the card. This not only makes the structure of the card storage and retrieval apparatus simpler, the manufacturing cost thereby being lower, but also, makes the card storage and retrieval rate of the card storage and retrieval apparatus according to one or more embodiments disclosed herein faster and more efficient.

Other aspects and advantages will be apparent from the following description and the appended claims.

### BRIEF DESCRIPTION OF DRAWINGS

FIGs. 1-3 show schematic diagrams of the structure of a first example of the rotary-disk type card storage and retrieval device according to one or more embodiments. FIG. 1 and FIG. 2 are schematic perspective views of the structure, and FIG. 3 is a side view (cross-sectional view).
FIG. 4 shows a schematic diagram of the (partial) structure of the blocking portion.
FIG. 5 shows a schematic diagram of the structure of the rotary disk in a second example of the rotary-disk type card storage and retrieval device according to one or more embodiments.
FIG. 6 shows a schematic perspective view of the structure of a third example of the rotary-disk type card storage and retrieval device according to one or more embodiments.
FIG. 7 shows a schematic perspective view of the structure of a first example of the card storage and retrieval apparatus according to one or more embodiments.
FIG. 8 shows a schematic perspective view of the card transport mechanism in FIG. 7.
FIG. 9 shows a side view (partially) of the clamping mechanism in FIG. 8.
FIG. 10 shows a partial view of the rotary-disk type card storage and retrieval device shown in FIG. 7.
FIG. 11 shows a schematic perspective view of the structure of a second example of the card storage and retrieval apparatus according to one or more embodiments.
FIG. 12 shows a top view of FIG. 11.

### DETAILED DESCRIPTION

The present invention will be further described in detail with reference to the following embodiments and the accompanying drawings, but the embodiments of the present invention are not limited thereto.

### Example 1

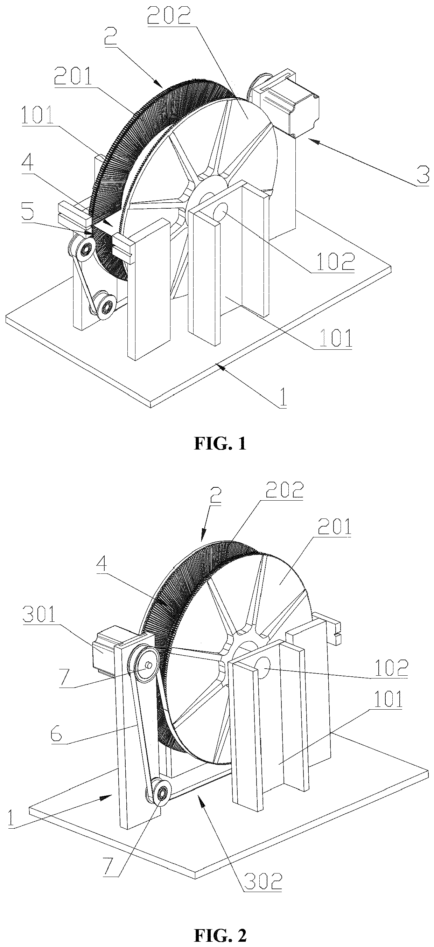

Referring to FIGs. 1-4, this example describes a rotary-disk type card storage and retrieval device according to one or more embodiments, comprising a support 1, a rotary disk 2 disposed on the support 1, and a rotary disk driving mechanism 3 that drives the rotary disk 2 to rotate. An axis of the rotary disk 2 is horizontally arranged. The rotary disk 2 is provided with a plurality of card storage slots 4 that store cards 15, and the card storage slots 4 are evenly distributed along the circumferential direction of the rotary disk 2. One end of each card storage slot 4 is an access opening for a card 15 to enter and exit, and the access opening is located on the cylindrical surface of the rotary disk 2. The other end of each card storage slot 4 extends into the interior of the rotary disk 2.

Referring to FIGs. 1-3, as an example, the rotary disk 2 comprises two circular plates 201, 202 opposite to each other and a connecting shaft 203 that connects the two circular plates 201, 202 together. The opposite surfaces of the two circular plates 201, 202 are each provided with grooves 401, 402 that are distributed along the circumferential direction and that position and guide the cards 15. The grooves 401, 402 on the two circular plates 201, 202 are disposed opposite and parallel to each other. Two opposite grooves 401, 402 and the space between the two grooves 401, 402 combine to form a card storage slot 4. The radial depth of the card storage slot 4 is equal to or slightly greater than the length of the card 15 in the same direction. The rotary disk 2 with the above-described structure has the advantage of easy processability. It is only necessary to mill the grooves 401, 402 on the surfaces of the two circular plates 201, 202, and the machining is very convenient. Further, a card storage slot 4 formed by combination of two opposing grooves 401, 402 accommodates and limits only two edges of a card 15 so that two adjacent card storage slots 4 are connected at other parts than the edge parts of the card 15. Thus, a space exists between two adjacent cards 15 so that there is space for a clamping mechanism to reach into the rotary disk 2 to clamp a card 15 to easily retrieve the card 15 or put the card 15 into the card storage slot 4.

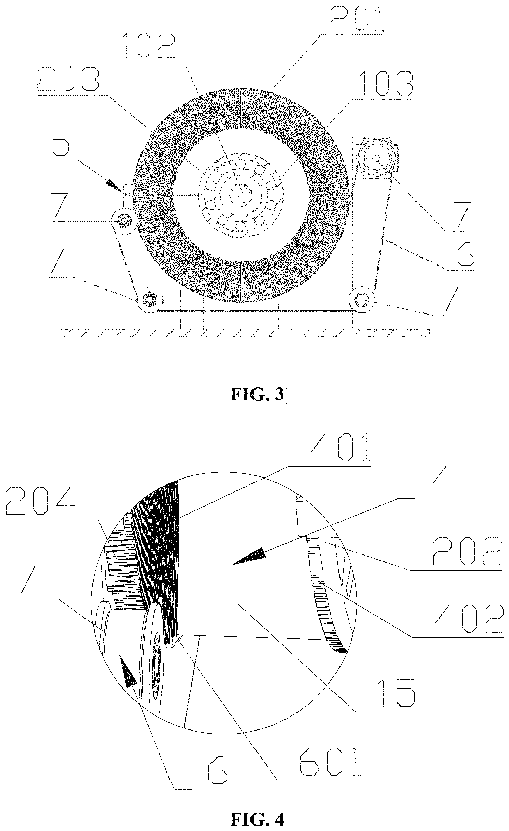

Referring to FIG. 3, the card storage slots 4 each extends along a radial plane of the rotary disk 2; that is, the extension line of each card storage slot 4 passes through the center of the rotary disk 2.

Referring to FIGs. 1-4, two ends of the connecting shaft 203 are respectively connected to the inner central portions of the two circular plates 201, 202. Specifically, the connecting shaft 203 and the circular plates 201, 202 may be fixed together by using a screw that is inserted from the outside of the circular plates 201, 202. The connecting shaft 203 is coaxially arranged with the two circular plates 201, 202. The two circular plates 201, 202 and the connecting shaft 203 are each provided with a coaxial mounting hole. A rotating shaft 102 is disposed through the mounting holes, and the rotary disk 2 is mounted on the support 1 via the rotating shaft 102.

One of the characteristics of the rotary disk 2 according to one or more embodiments is that the access openings of the card storage slots 4 are located on the outer cylindrical surface of the rotary disk 2 in order to allow the cards 15 to enter or leave the card storage slots 4 from the outer cylindrical surface of the rotary disk 2. Other rotary disks 2 with this structural feature are also possible implementations of the present invention.

Referring to FIGs. 1-4, the rotary-disk type card storage and retrieval device according to one or more embodiments further comprises a card-holding belt 6 that supports the cards 15. The card-holding belt 6 has a card-holding section surrounding a lower portion of the outer cylindrical surface of the rotary disk 2, and the card-holding belt 6 rotates synchronously with the rotary disk 2. The card-holding section of the card-holding belt 6 has a blocking portion 601 extending to the access openings of the card storage slots 4, and the cards 15 in the lower portion of the rotary disk 2 are supported by the blocking portion 601. In this way, the cards 15 in the card storage slots 4 in the lower portion of the rotary disk 2 are supported by the blocking portion 601 of the card-holding section of the card-holding belt 6 so that the cards 15 are confined in the card storage slots 4 without dropping off Moreover, due to the synchronous rotation of the card-holding belt 6 with the rotary disk 2, there is no relative displacement between the card-holding belt 6 and the rotary disk 2, and thus the card-holding section of the card-holding belt 6 and the rotary disk 2 can be regarded as an integral structure. During the rotation of the rotary disk 2, there is no relative movement between the card disk in the lower portion of the rotary disk 2 and the card-holding section of the card-holding belt 6, so that the cards 15 will not be worn and the frictional resistance on the rotation of the rotary disk 2 will not increase.

Referring to FIGs. 1-4, as an easy way of implementing the synchronous rotation of the rotary disk 2 with the card-holding belt 6, the card-holding belt 6 is a synchronous belt, and a plurality of engaging teeth 204 are provided on the outer circumferential surface of one of the circular plates 201 of the rotary disk 2. The positions of the plurality of engaging teeth 204 are in a one-to-one correspondence with the grooves 401 on said circular plate 201. A plurality of synchronous teeth (not shown) are provided on an outer surface of the card-holding belt 6, and the plurality of synchronous teeth on the card-holding section of the card-holding belt 6 engage with the plurality of engaging teeth 204. In this way, the rotary disk 2 and the card-holding section of the card-holding belt 6 can rotate in a strictly synchronous manner without slipping. The card-holding belt 6 supports the cards 15 at the circumferential surface of the lower portion of the rotary disk 2 and contacts the outer edges of the cards 15. Specifically, the synchronous teeth at the card-holding section on the outer surface of the card-holding belt 6 are in contact with the outer edges of the cards 15 so as to support the cards 15. In operation, the card-holding belt 6 rotates synchronously with the rotary disk 2, and the cards 15, the rotary disk 2, and the card-holding section of the card-holding belt 6 remain relatively stationary, preventing the cards 15 from dropping due to gravity.

Referring to FIGs. 1-4, a plurality of synchronous wheels 7 are further provided on the inner side of the card-holding belt 6, and other parts of the card-holding belt 6 than the card-holding section surround these synchronous wheels 7 so that the synchronous belt forms a cyclic structure. Among the synchronous wheels 7, two are located at the two ends of the card-holding section, respectively. In operation, the card-holding section of the card-holding belt 6 rotates synchronously with the rotary disk 2, and at the same time, the card-holding belt 6 itself rotates around the synchronous wheels 7 in a cyclic manner.

Referring to FIGs. 1-4, a rotary disk driving mechanism 3 is used to drive the rotary disk 2 to rotate. The rotary disk driving mechanism 3 comprises a motor 301 and a transmission mechanism 302 that transmits the driving power of the motor 301 to the rotary disk 2 to drive the rotary disk 2 to rotate. The transmission mechanism 302 may be a belt transmission mechanism, a gear transmission mechanism, a chain transmission mechanism, or the like, and may also be a coupling that directly connects the main shaft of the motor 301 and the rotary disk 2 coaxially together. In this example, the transmission mechanism 302 comprises the card-holding belt 6 and the synchronous wheels 7 located on the inside of the card-holding belt 6, and the main shaft of the motor 301 is connected to one of the synchronous wheels 7. In this way, the card-holding belt 6 not only plays the role of supporting the cards 15, but also, plays the role of driving the rotary disk 2.

Referring to FIGs. 1-4, the support 1 further comprises two supporting plates 101 disposed on the two sides of the rotary disk 2, respectively. The two ends of the rotating shaft 102 which passes through the connecting shaft 203 and the rotary disk 2 are respectively connected to the two supporting plates 101. A bearing 103 is provided between the rotating shaft 102 and the connecting shaft 203.

In order to prevent the cards 15 in the upper portion of the rotary disk 2 from being tossed out due to inertia during the rotation of the rotary disk 2, a fixed baffle that prevents the cards from being tossed out due to inertia is provided on an outer side of an upper portion of the outer circumferential surface of the rotary disk 2. The inner side of the baffle is configured to be arc-shaped. The baffle and the card-holding belt 6 combine to form a card-blocking mechanism. Since the baffle is located above the rotary disk 2, the cards 15 always have a tendency to move downwards due to gravity so that relative friction between the cards 15 and the baffle may be avoided.

Referring to FIGs. 1-4, when the rotary-disk type card storage and retrieval device according to one or more embodiments is in operation, a card entrance-exit 5 needs to be provided on the outside of the circumferential surface of the rotary disk 2 for allowing the cards 15 to enter or leave the card storage slots 4 of the rotary disk 2. When a card 15 needs to be sent into a certain card storage slot 4 of the rotary disk 2, the rotary disk driving mechanism 3 drives the rotary disk 2 to rotate so that the corresponding card storage slot 4 is rotated to the card entrance-exit 5. The card 15 then passes through the card entrance-exit 5 into the card storage slot 4. Similarly, when a card 15 in a certain card storage slot 4 in the rotary disk 2 needs to be retrieved, the rotary disk driving mechanism 3 drives the rotary disk 2 to rotate so that the corresponding card storage slot 4 is rotated to the card entrance-exit 5. The card 15 in the card storage slot 4 is then retrieved through the card entrance-exit 5. The card entrance-exit 5 is a horizontal passage disposed on a horizontal plane corresponding to the center of the rotary disk 2, and the card 15 enters or leaves the card storage slot 4 of the rotary disk 2 in a horizontal posture.

### Example 2

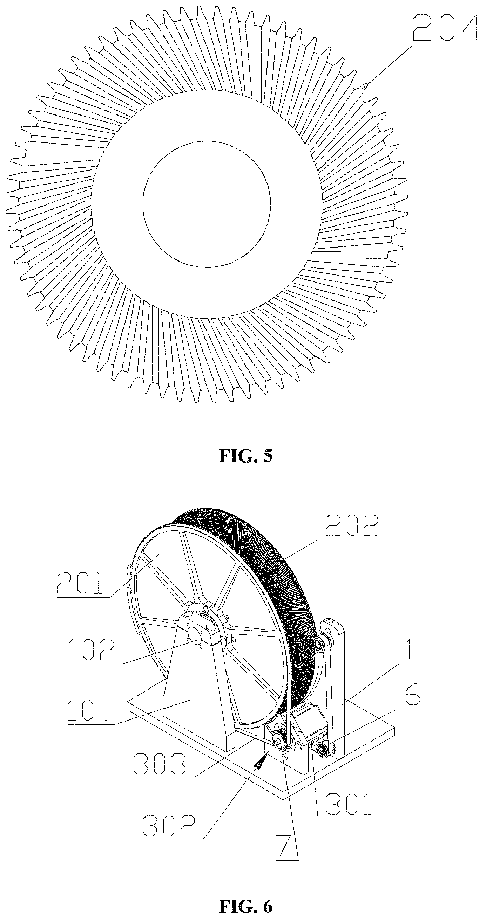

Referring to FIG. 5, the present example differs from Example 1 in that the card storage slots 4 each extend along a plane that forms an angle with a radial plane of the rotary disk 2; that is, the extension line of each card storage slot 4 is at a distance from the center of the rotary disk 2. This configuration has two advantages: 1, The position of the card entrance-exit 5 can be lowered. Since the extension lines of the card storage slots 4 are at a certain distance from the center of the rotary disk 2, the height of the card storage slot 4 in the rotary disk 2 in the horizontal plane is lower than that of the card storage slot 4 where the extension lines pass through the center of the rotary disk 2. The card entrance-exit 5 is configured as a horizontal passage, and the height of the card storage slot 4 in the rotary disk 2 in the horizontal plane is also the height where the card entrance-exit 5 is disposed. By lowering the position of the card entrance-exit 5, the cards 15 can be transported at a lower position so that the bottom space can be fully utilized. 2. The centrifugal force can be resisted so that the cards 15 are not easily dislodged from the card storage slots 4. During the rotation of the rotary disk 2 driven by the rotary disk driving mechanism 3, the direction of the centrifugal force suffered by the card 15 in a card storage slot 4 intersects with the plane in which that card storage slot 4 is. Therefore, the centrifugal force is decomposed into a perpendicular component perpendicular to the plane in which the card storage slot 4 is and the parallel component parallel to the plane in which the card storage slot 4 is, so that the centrifugal force is reduced. Meanwhile, the perpendicular component also increases the frictional force between the card storage slot 4 and the card 15 so that the card 15 is less likely to be displaced relative to the card storage slot 4.

### Example 3

Referring to FIG. 6, the present example differs from Example 1 in that the rotary disk driving mechanism 3 comprises a motor 301 and a synchronous belt transmission mechanism 302. The synchronous belt transmission mechanism 302 comprises a synchronous belt 303 and a plurality of synchronous wheels 7. Engaging teeth 204 are provided on the outer circumferential surfaces of both circular plates 201, 202 of the rotary disk 2. The synchronous teeth of the synchronous belt 303 in the rotary disk driving mechanism 3 engage with the engaging teeth 204 on one of the circular plates 201, while the synchronous teeth on the card-holding belt 6 engage with the engaging teeth 204 on the other one of the circular plates 202. In this way, the synchronous belt 303 in the rotary disk driving mechanism 3 is used to drive the rotary disk 2 to rotate, and the card-holding belt 6 is only used to support the cards 15.

### Example 4

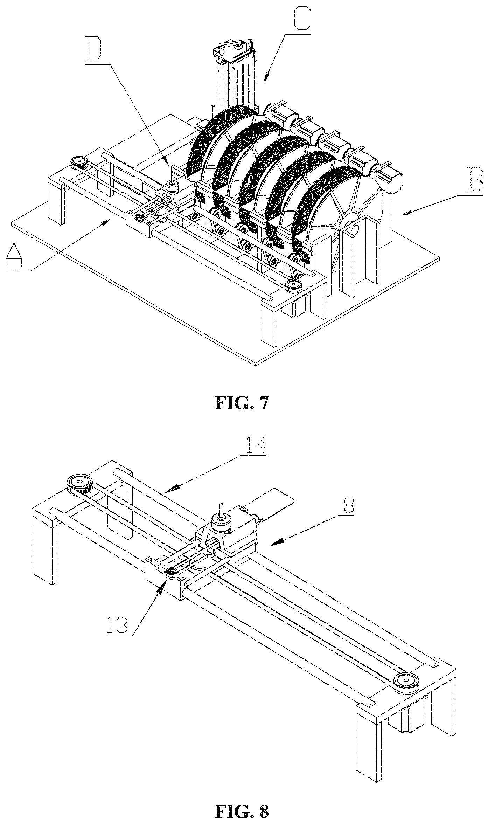

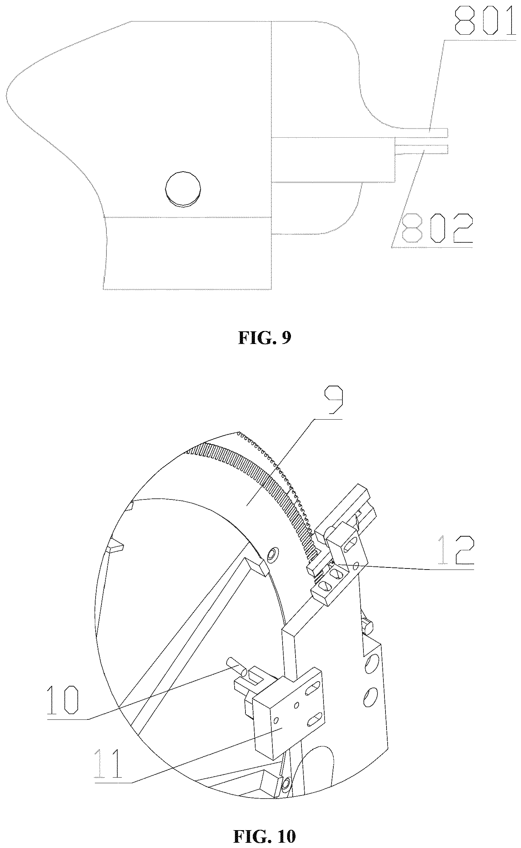

Referring to FIGs. 7-10, the present example describes a card storage and retrieval apparatus according to one or more embodiments. The card storage and retrieval apparatus comprises the card storage and retrieval device B, a card issuing device C that holds cards 15 to be stored and issues cards 15 one by one, an identification device D that identifies characteristic information of cards 15, a card transport mechanism A that transports cards 15, and the control system. A card entrance-exit 5 that allows cards 15 to enter or leave the card storage slots 4 of the rotary disk 2 is provided on the outer side of the rotary disk 2 of the card storage and retrieval device B.

Referring to FIGs. 7-10, the card transport mechanism A is used to transport a card issued by the card issuing device C to the card entrance-exit 5 and put the card 5 into a card storage slot 4 of the rotary disk 2, and to take out a card 15 at the card entrance-exit 5 from the card storage slot 4 of the rotary disk 2 and carry the card 15 to a user retrieval opening. The card transport mechanism A comprises a clamping mechanism 8 that clamps the card 15 and a card transport driving mechanism that moves the clamping mechanism 8. The clamping mechanism 8 comprises a first clamping block 801 and a second clamping block 802 that can reach into spaces on both sides of a card 15 in a card storage slot 4 of the rotary disk 2, and a clamping driving mechanism that drives the clamping and releasing of the first clamping block 801 and the second clamping block 802.

Referring to FIGs. 7-10, the control system records all the card storage slots 4 in the rotary disk 2. The control system determines a card storage slot 4 uniquely corresponding to a card 15 according to the characteristic information of the card 15 identified by the identification device D when the card 15 is being stored, and causes the rotary disk 2 to rotate by controlling the rotary disk driving mechanism 3 so that the uniquely corresponding card storage slot 4 is turned to the card entrance-exit 5. The control system also determines a corresponding card 15 to be retrieved in the rotary disk 2 according to a card-retrieval instruction from a user and causes the rotary disk 2 to rotate by controlling the rotary disk driving mechanism 3 so that the card storage slot 4 that stores the card 15 to be retrieved is turned to the card entrance-exit 5.

Referring to FIGs. 7-10, the control system comprises a processor, a memory, and an input device. In order to record all the card storage slots 4, it is necessary to set one of the card storage slots 4 as the reference card storage slot 4. When the reference card storage slot 4 is at the card entrance-exit 5, the position of the rotary disk 2 at that time is designated zero position. The zero position of the rotary disk 2 is implemented through a zero position photoelectric sensor 10 and a zero position detection piece 11 disposed on the rotary disk 2. When the zero position detection piece 11 on the rotary disk 2 arrives at the zero position photoelectric sensor 10 and is detected by the zero position photoelectric sensor 10, the card storage slot 4 corresponding to the card entrance-exit 5 at that time is the reference card storage slot 4. The rotation angle of the rotary disk 2 is determined by the number of pulses sent from the control system to the motor 301 in the rotary disk driving mechanism 3. After the reference card storage slot 4 is determined, the rotation angles by which the other card storage slots 4 need to rotate to arrive at the card entrance-exit 5 can be converted to numbers of pulses sent by the control system to the motor 301. Thus, the control system can use the reference card storage slot 4 as a reference to record the positions of all the card storage slots 4 in the rotary disk 2.

Based on the above functions, the control system can store a card 15 in any designated card storage slot 4 and retrieve a card 15 from any designated card storage slot 4. In operation, the only need is to turn the designated card storage slot 4 to the card entrance-exit 5 so as to achieve designated storage and retrieval of cards 15.

In order to ensure that the rotation angle of the rotary disk 2 is accurate when a card is being stored or retrieved, it is also possible to make confirmation by providing a code dial 9 and a photoelectric sensor 12. Specifically, the code dial 9 is coaxially arranged on the rotary disk 2, and notches that are as many as the card storage slots 4 are evenly arranged along the circumferential direction on the code dial 9. During the rotation of the code dial 9 along with the rotary disk 2, the notches can be detected by the photoelectric sensor 12 when passing by the photoelectric sensor 12. Therefore, during the rotation of the rotary disk 2, the number of pulses sent by the control system to the motor 301 has a corresponding relationship with the number of notches on the code dial 9 passing by the photoelectric sensor 12. Thus, whether the rotation angle the rotary disk 2 is accurate can be verified by determining whether the two numbers are the same.

Referring to FIGs. 7-10, the identification device D is used to identify characteristic information of the cards 15. During storage operation, the identification device D identifies the characteristic information of a card 15 and sends the characteristic information to the control system to find the card storage slot 4 in the rotary disk 2 corresponding to the card 15, thereby achieving designated storage. During retrieval operation, before the card 15 is carried to the user retrieval opening, the identification device D reads the characteristic information of the card 15 so as to compare the characteristic information with the information of the designated card 15 in the user's card-retrieval instruction to verify whether said card 15 is the card 15 to be retrieved, thereby making the retrieval of the card 15 more accurate. The characteristic information of the card 15 may be electronic information stored in the card 15 or printed information on a surface of the card 15. The information has a unique correspondence to the card 15. The identification device D may be a chip card reader, a magnetic stripe card reader, or an image identification device.

Referring to FIGs. 7-10, in the card transport mechanism A, the clamping driving mechanism that drives the clamping and releasing of the first clamping block 801 and the second clamping block 802 may be a combination of a motor and a screw transmission mechanism. The clamping driving mechanism may also be an electromagnet or any other suitable device which can drive the clamping and releasing of the first clamping block 801 and the second clamping block 802 in order to clamp or release the card 15. The clamping portions of the first clamping block 801 and the second clamping block 802, when opened, should not touch other cards 15 in the adjacent card storage slots 4. The first clamping block 801 and the second clamping block 802 may have a "spearhead" configuration.

Referring to FIGs. 7-10, the card transport driving mechanism in the card transport mechanism A is used to drive the clamping mechanism 8 to move, and specifically may comprise a longitudinal driving mechanism 13 and a transverse driving mechanism 14 that drive the clamping mechanism 8 in the longitudinal and transverse directions, respectively. The longitudinal driving mechanism 13 and the transverse driving mechanism 14 each may comprise a motor and a screw transmission mechanism, or a motor and a synchronous belt transmission mechanism. In this example, the latter configuration is used.

Referring to FIG. 7, the numbers of the card issuing device C and the rotary-disk type card storage and retrieval device B may be chosen in a flexible way. In this example, one card issuing device C and five card storage and retrieval devices B are provided.

Referring to FIGs. 7-10, the working principle of the card storage and retrieval apparatus according to one or more embodiments is as follows:
The card storage and retrieval apparatus according to one or more embodiments includes two operations, i.e., card storage and card retrieval. Card storage refers to the storage of a card 15 that has been prepared into a card storage slot 4 of the rotary disk 2. Card retrieval refers to the retrieval of a card 15 that has been stored in a card storage slot 4.

During storage operation, the cards 15 to be stored are held in the card issuing device C and are issued by the card issuing device C one by one. An issued card 15 first enters the identification device D for reading and identification of the characteristic information of the card 15, and the read characteristic information of the card 15 is transmitted to the control system. The control system records all the card storage slots 4 in the rotary disk 2 and knows the position of each card storage slot 4 in the rotary disk 2. The control system has predetermined the card 15 to be stored in each card storage slot 4 and makes an association through the characteristic information of the card 15. The control system determines the card storage slot 4 uniquely corresponding to the card 15 after receiving the characteristic information of the card 15 from the identification device D and causes the rotary disk 2 to rotate by controlling the rotary disk driving mechanism 3 so that the uniquely corresponding card storage slot 4 is turned to the card entrance-exit 5. The card transport mechanism A transports the card to the card entrance-exit 5 and puts the card into the corresponding card storage slot 4. By repeating this operation, all the cards will eventually be stored into the card storage slots 4 of the rotary disk 2.

During retrieval operation, a user enters the identification information corresponding to the card 15 to be retrieved to the apparatus, and the information is transmitted to the control system. The control system determines the corresponding card 15 to be retrieved in the rotary disk 2 according to the information and causes the rotary disk 2 to rotate by controlling the rotary disk driving mechanism 3 so that the card storage slot 4 that stores the card 15 to be retrieved is turned to the card entrance-exit 5. The card 15 is then taken out of the card storage slot 4 by the card transport mechanism A and transported to the user retrieval opening. The user retrieves the corresponding card 15 from the user retrieval opening.

### Example 5

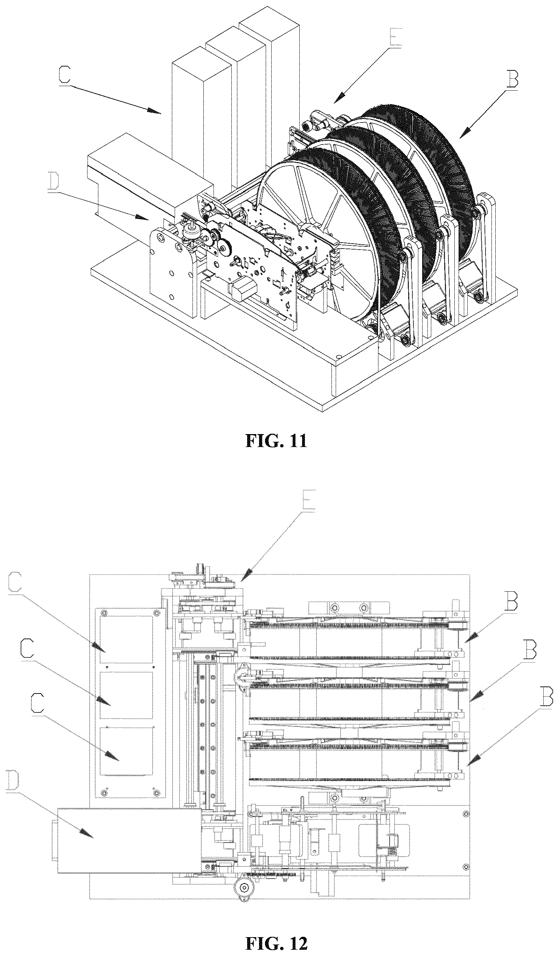

Referring to FIG. 11 and FIG. 12, the present example differs from Example 4 in that the card transport driving mechanism comprises a card delivery cart E and a cart driving mechanism that drives the card delivery cart, wherein the card delivery cart E is provided with a card delivery mechanism for delivering cards. The specific structure of the card delivery cart E may be implemented by referring to the prior art, for example, Chinese Patent No. CN205771627U. The cart driving mechanism may be implemented by the transverse driving mechanism 14 in Example 4.

Referring to FIGs. 11-12, the numbers of the card issuing device C and the rotary-disk type card storage and retrieval device B are identical and corresponding. In this example, three card issuing devices C and three card storage and retrieval devices B are provided.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A rotary-disk type card storage and retrieval device comprising:
a support;
a rotary disk disposed on the support;
a rotary disk driving mechanism that drives the rotary disk to rotate; and
a card-holding belt that supports the cards,
wherein an axis of the rotary disk is horizontally arranged,
wherein the rotary disk is provided with a plurality of card storage slots that store cards, the plurality of card storage slots being evenly distributed along a circumferential direction of the rotary disk,
wherein one end of each of the plurality of card storage slots is an access opening for a card to enter and exit, the access opening being located on an outer cylindrical surface of the rotary disk, and the other end of each of the plurality of card storage slots extends into the interior of the rotary disk,
wherein the card-holding belt has a card-holding section surrounding a lower portion of the outer cylindrical surface of the rotary disk, and the card-holding belt rotates synchronously with the rotary disk, and
wherein the card-holding section of the card-holding belt has a blocking portion extending to the access openings of the card storage slots and the cards in the lower portion of the rotary disk are supported by the blocking portion.

2. The rotary-disk type card storage and retrieval device of claim 1, wherein each of the plurality of card storage slots extends along a radial plane of the rotary disk.

3. The rotary-disk type card storage and retrieval device of claim 1, wherein each of the plurality of card storage slots extends along a plane that forms an angle with a radial plane of the rotary disk.

4. The rotary-disk type card storage and retrieval device of any of claims 1-3,
wherein the rotary disk comprises two circular plates opposite to each other and a connecting shaft that connects the two circular plates,
wherein the opposite surfaces of the two circular plates are both provided with grooves evenly distributed along the circumferential direction that position and guide the cards,
wherein the grooves on the two circular plates are disposed opposite and parallel to each other in a one-to-one correspondence,
wherein two opposite grooves and the space between the two grooves combine to form one card storage slot, and
wherein a radial depth of each of the plurality of card storage slots is equal to or slightly greater than a length of the card in the same direction.

5. The rotary-disk type card storage and retrieval device of claim 4, wherein the two ends of the connecting shaft are respectively connected to central portions of the two circular plates, and wherein the connecting shaft is arranged coaxially with the two circular plates.

6. The rotary-disk type card storage and retrieval device of any of claims 1-5, wherein the rotary disk driving mechanism comprises:
a motor; and
a transmission mechanism that transmits driving power of the motor to the rotary disk so as to drive the rotary disk to rotate.

7. The rotary-disk type card storage and retrieval device of any of claims 1-6, wherein a fixed baffle that prevents the cards from being tossed out due to inertia is provided on an outer side of an upper portion of the outer circumferential surface of the rotary disk, and wherein the baffle and the card-holding belt combine to form a card-blocking mechanism.

8. A card storage and retrieval apparatus comprising:
a rotary-disk type card storage and retrieval device that comprises:
a support;
a rotary disk disposed on the support;
a rotary disk driving mechanism that drives the rotary disk to rotate; and
a card-holding belt that supports the cards,
a card issuing device that holds cards to be stored and issues the cards one by one; and
a card transport mechanism,
wherein an axis of the rotary disk is horizontally arranged,
wherein the rotary disk is provided with a plurality of card storage slots that store cards, the plurality of card storage slots being evenly distributed along a circumferential direction of the rotary disk,
wherein one end of each of the plurality of card storage slots is an access opening for a card to enter and exit, the access opening being located on an outer cylindrical surface of the rotary disk, and the other end of each of the plurality of card storage slots extends into the interior of the rotary disk,
wherein the card-holding belt has a card-holding section surrounding a lower portion of the outer cylindrical surface of the rotary disk, and the card-holding belt rotates synchronously with the rotary disk, and
wherein the card-holding section of the card-holding belt has a blocking portion extending to the access openings of the card storage slots and the cards in the lower portion of the rotary disk are supported by the blocking portion.
wherein a card entrance-exit that allows the cards to enter or leave the card storage slots of the rotary disk is provided on an outer side of the rotary disk of the rotary-disk type card storage and retrieval device, and
wherein the card transport mechanism transports a card issued by the card issuing device to the card entrance-exit and puts the card into a card storage slot of the rotary disk, and takes out a card at the card entrance-exit from a card storage slot of the rotary disk and transports the card to a user retrieval opening.

9. The card storage and retrieval apparatus of claim 8, further comprising:
an identification device that identifies characteristic information of the cards; and a control system,
wherein the control system records all the card storage slots of the rotary disk, determines a card storage slot uniquely corresponding to a card according to the characteristic information of the card identified by the identification device when the card is being stored, and causes the rotary disk to rotate by controlling the rotary disk driving mechanism so that the uniquely corresponding card storage slot is turned to the card entrance-exit, and
wherein the control system determines a corresponding card to be retrieved in the rotary disk according to a card-retrieval instruction from a user and causes the rotary disk to rotate by controlling the rotary disk driving mechanism so that the card storage slot that stores the card to be retrieved is turned to the card entrance-exit.

10. The card storage and retrieval apparatus of claim 8 or claim 9, wherein the card transport mechanism comprises:
a clamping mechanism that clamps the cards, the clamping mechanism comprising:
a first and second clamping blocks that can reach into spaces on both sides of a card in a card storage slot of the rotary disk to clamp the card; and
a clamping driving mechanism that drives the clamping and releasing of the first and second clamping blocks; and
a card transport driving mechanism that drives the clamping mechanism to move.

11. The card storage and retrieval apparatus of claim 10, wherein the card transport driving mechanism comprises:
a longitudinal driving mechanism that drives the clamping mechanism to move in a longitudinal direction; and
a transverse driving mechanism that drives the clamping mechanism to move in a transverse direction.

12. The card storage and retrieval apparatus of claim 10, wherein the card transport driving mechanism comprises:
a card delivery cart; and
a cart driving mechanism that drives the card delivery cart to move.
